# EUROPEAN PATENT SPECIFICATION

(11) **EP 2 152 057 B1**
(45) Date of publication and mention of the grant of the patent: **11.07.2012**
(21) Application number: 08779363.4
(22) Date of filing: 09.06.2008
(51) Int. Cl.: A01C 7/12

(54) **SEEDING HOUSE**
SAATGEHÄUSE
BOÎTIER À SEMENCE

(30) Priority: 06.06.2007 SE 0701413
(43) Date of publication of application: 17.02.2010
(73) Proprietor: Väderstad-Verken AB, 590 21 Väderstad (SE)
(72) Inventor: STARK, Crister, 590 21 Väderstad (SE)
(74) Representative: Lettström, Richard Wilhelm
(86) International application number: PCT/SE2008/050681
(87) International publication number: WO 2008/150240

(56) References cited:
- EP-A2- 0 927 511
- WO-A1-97/00603
- WO-A1-98/12512
- US-A- 3 606 965
- US-A- 5 845 818

## Description

The invention refers to a seed house for a seed drill according to the pre-characterising portion of Claim 1.

### TECHNICAL AREA

Through WO 97/00603 is known a reversible seed house with one or more rotors arranged along the same rotation axle. The rotor or rotors can be driven by a motor that is arranged outside the seed house and mounted against the rotor for direct driving of the rotor axle. With several rotors arranged axially after one another these can be driven by two separate motors, one on each side of the seed house, each one mounted with its axle in line with the axle of the corresponding rotor for direct driving of this rotor axle.

Centrally placed seed houses with pneumatic metering systems, which in a main pipe blow seed, fertiliser, crop protection chemical or other granular material (below called seed) to one or more level distributor heads, have been available on the market since the 1970s. These systems have very good function and are used on a large scale. They are adapted to meter out a number of different types of seed or fertiliser. They are adapted to meter out oilseeds in an amount of 1.5 kg/ha and peas in an amount of 400 kg/ha and in certain cases even more per ha. One problem is that the space, in which the systems have to be built within in the machine, is limited.

### AIM OF THE INVENTION

The aim of the invention is to create a seed house at an agricultural machine that provides the greatest possible user-friendliness. The solution should also be reliable, cost-effective and easy to use so that the above mentioned problems are minimised.

### SUMMARY OF THE INVENTION

The aim is achieved through a seed house according to the characterising portion of Claim 1.

The sub-claims refer to preferred embodiments of the invention.

Through the present solution the seed house according to the invention can be built in right or left embodiment. As in all industrial production the cost of manufacturing is an important aspect and the reversible seed house also provides a cost-effective solution. The seed house according to the present invention solves a number of manufacturing problems. The solution also leads to very great user-friendliness and provides a very compact entity that can easily be mounted even in restricted spaces. The seed houses are built in modules, which allows right and left embodiments with the same parts. The inbuilt drive motor contributes greatly to the compact solution. The power from the motor is transferred to the rotor through a transmission that can have one or several gear stages.

The seed house according to the present invention has motor and rotor integrated and placed in tandem, i.e. the central axle of the motor is assembled in parallel with the central axle of the rotor in the same house. Both rotor and motor can be mounted from the right or left side. The motor is preferably mounted in that part of the house that contains the ejector. When the ejector consumes a large amount of air the motor is cooled by this downward flowing air. The seed house according to the present invention can be assembled with or without gears. An additional advantage is that the motor is protected from blows and impacts within the seed house.

### DRAWING SUMMARY

The invention is described more closely below with reference to the attached drawings, which show preferred examples of embodiments.
Figure 1 shows two seed houses according to the present invention for a seed drill, which is mounted under a partially sectioned container for seed or similar, wherein parts have been removed from the seed drill for the sake of clarity.
Figure 2 shows a perspective view from above of the left seed house in Fig. 1 mounted under the container, of which only its lower part is shown.
Figure 3 shows a perspective view from above of the right seed house in Fig. 1.
Figure 4 shows a perspective view similar to that in Fig. 3 of the right seed house in Fig. 1, where a closing flap has been drawn out a little.
Figure 5 shows a perspective view similar to that in Fig. 4, although from another angle.
Figure 6 shows a perspective view similar to that in Fig. 4 of the right seed house in Fig. 1, where the closing flap and the protective casing have been removed for the sake of clarity.
Figure 7 shows a perspective view similar to that in Fig. 6, although from another angle.
Figure 8 shows a planar view from above of the right seed house in Fig. 1, where the closing flap and the protective casing have been removed for the sake of clarity.
Figure 9 shows a planar view from above of the left seed house in Fig. 1, where the closing flap and the protective casing have been removed for the sake of clarity.

### DESCRIPTION OF PREFERRED EMBODIMENTS

Similar details shown in the drawings have been given the same reference number.

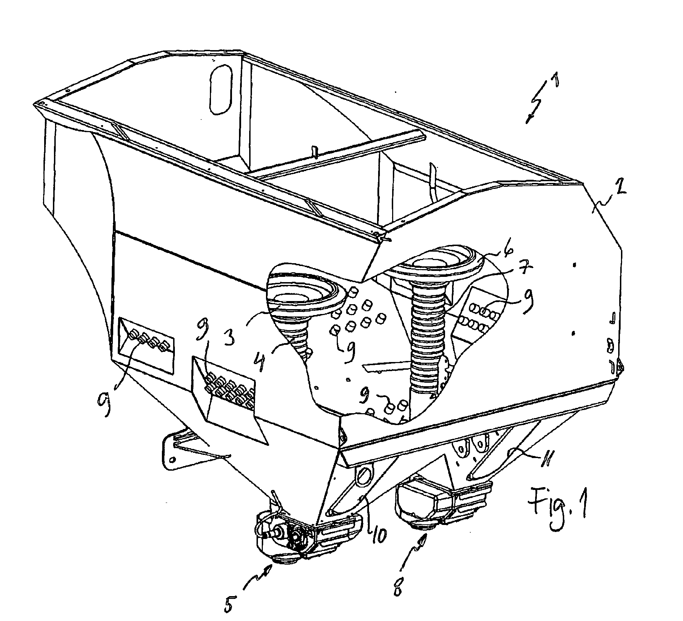

Fig. 1 shows schematically a part of a seed drill 1, which comprises a container 2 for seed, fertiliser, crop protection chemical or other granular material, a first distributor 3 with a first riser pipe 4 connected to a first seed house 5 according to the invention and a second distributor 6 with a second riser pipe 7 connected to a second seed house 8 according to the invention. For the sake of clarity the upper parts of the distributors, the flexible seed hoses mounted thereon, which are connected via through-connection pieces 9 to not shown coulters or other seed spreading aggregates, fans and further parts of the seed drill 1 have been removed for the sake of clarity. The seed drill 1 is usually wheel-borne, and also drawn by a not shown tractor or similar. Within observation openings 10, 11 created in the container above seed houses 5 and 8 plexiglas has been mounted. In Fig. 1 two seed houses 5, 8 have thus been mounted on a container 2. This is usual when with large seed drills with very large span and consequently with many seed coulters a greater capacity is required and one seed house is not sufficient for the large amount of seed or similar that has to be transported to the seed coulters. It is then common for two seed houses and two distributors to be mounted on the same container. One alternative is to use two seed houses to sow different granules, for example seed and fertiliser. In such cases the container is divided into two chambers and the flexible seed hoses are mounted in a different way.

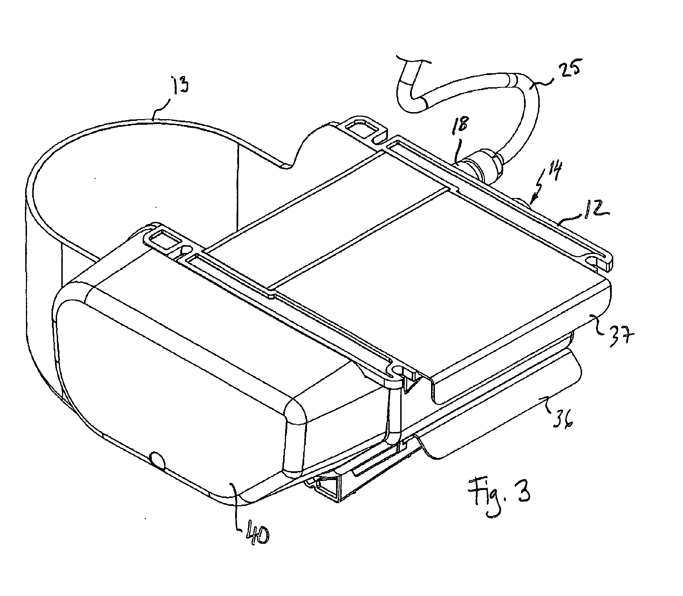

In Figs. 1 - 5 seed houses 5, 8 according to the invention are shown mounted in different ways. Fig. 1 shows the first seed house 5 in a left-mounted embodiment and the second seed house 8 in a right-mounted embodiment.

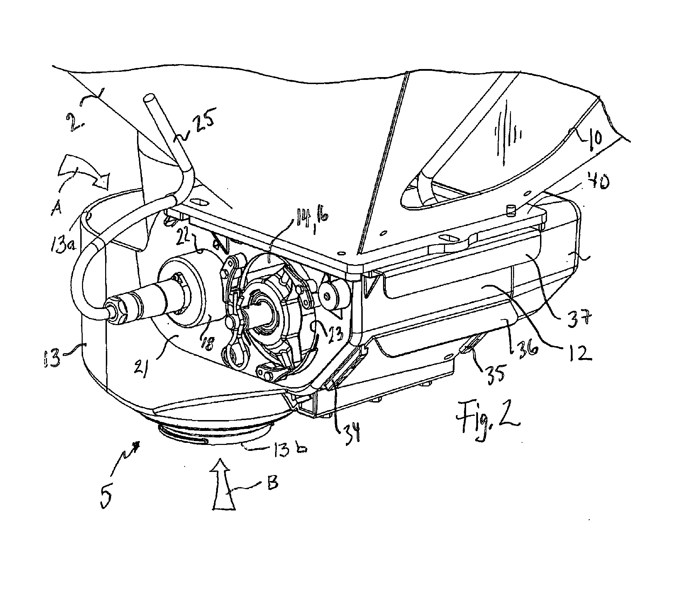

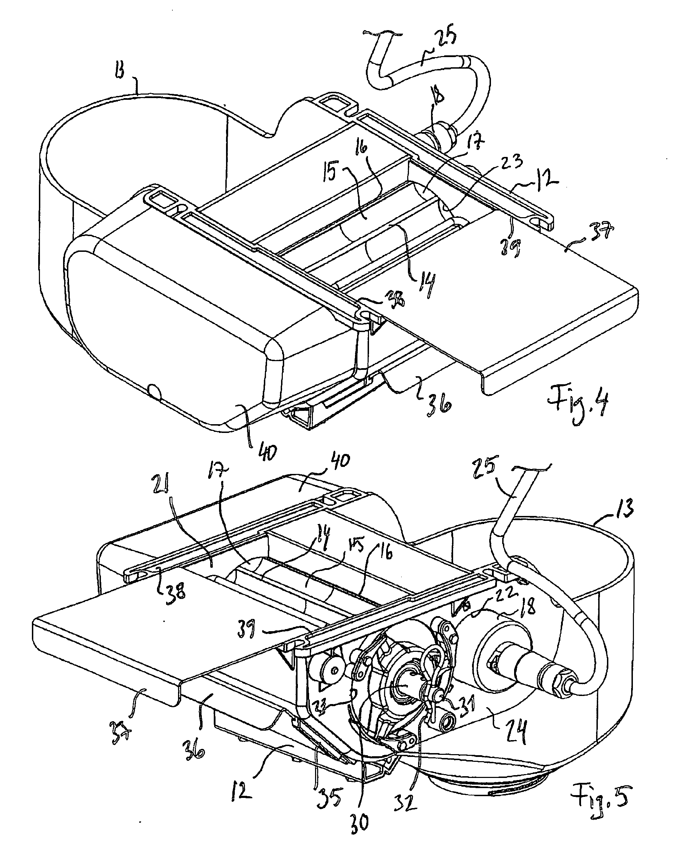

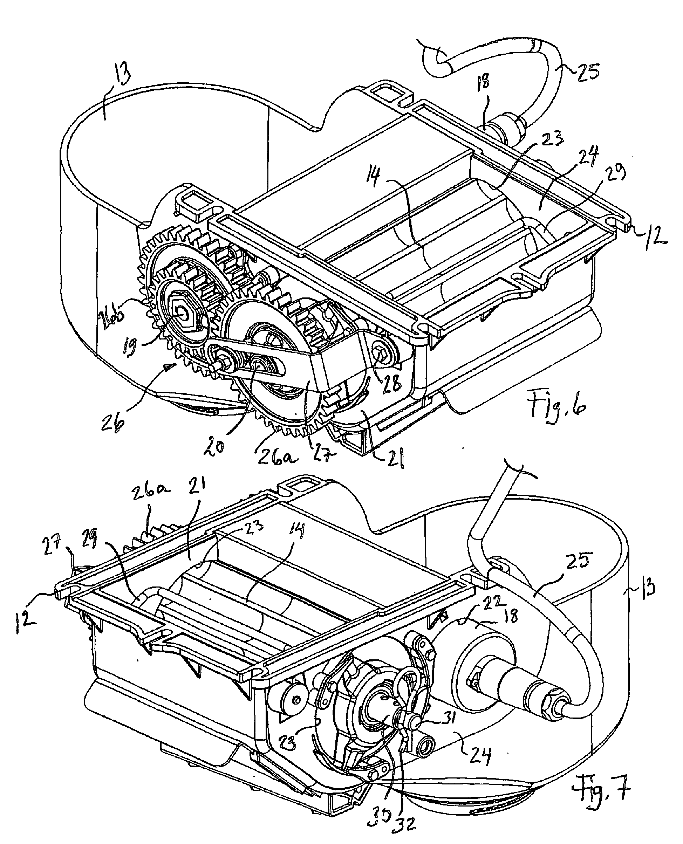

Fig. 2 shows the first seed house 5 mounted at the base of the container 2. The seed house 5 comprises a house 12 and fastened at the house or made in one piece a pipe connection piece 13 (so-called ejector part of the seed house 5, 8). The pipe connection piece 13 has a lower opening 13a, which is connected to a not shown pipe from a not shown fan, which blows air in the direction of an arrow A and conducts this through the seed house for transport of dosed seed to the distributors 3, 6. The pipe connection piece 13 has also an upper opening 13b, which is open outwards to the surroundings for the drawing in of air in the direction of an arrow B at activation of the pneumatic transport device for transport of seed to the distributors 3, 6. The opening 13b is preferably covered by a not shown perforated filter plate to prevent objects being sucked into the seed house. The seed is dosed by means of a visible in Fig. 4 - 9 rotor 14, which along its periphery has preferably semi-cylindrical shaped recesses 15, which with the circle-shaped ridges 16 of the rotor 14 and the inner wall of the house 12 facing the rotor 14 form at 17 chambers for dosing of seed. A motor 18 for driving the rotor 14 is mounted in the house 12 with its drive axle 19 generally parallel to the central axle 20 of the rotor (see Fig. 6). In one of the side gables 21 of the house 12 holes 22 and 23 are provided for mounting of the motor 18 and the rotor 14. Additional holes 22 and 23 with corresponding diameter are provided in the opposite side gable 24 of the house 12. In this way both the motor 18 and the rotor 14 can be inserted and mounted from either gable wall 21 or 24. An electric cable 25 is connected to the motor 18 for its operation. The motor 18 and the rotor 14 are co-coupled by means of a transmission 26 consisting of a cogged gearing. At a cogwheel 26a, which is connected with the rotor 14, an arm 27 is jointedly mounted so as to execute an upward- and downward-going movement around the point of rotation 28. The arm 27 is linked to a U-shaped, journalled in bearings in the gables of the house 12 stirrer 29 within the house 12, which advantageously executes a forward and return rotational movement in order to counteract clogging of seed and blocking or braking of the rotor 14. The drive axle of the motor 8 is fixedly wedged and non-rotatably connected with the cogwheel 26b of the transmission. The rotor 14 is fixedly mounted on a pipe-shaped axle 30, which is threaded onto a rotation axle 31, which is fixedly wedged and non-rotatably connected with the cogwheel 26b of the transmission. A lock-pin 32 is inserted through a hole in the rotation axle 31 for locking fast the rotor 14 in the house 12. This arrangement is adapted so as to allow the rotor 14 to be exchanged for a rotor with a different dosing or so as to clean around the rotor.

At the side 33 of the seed house 12 opposite the connection piece 13 there is an opening 34, on the corresponding sides of which grooves 34, 35 are arranged so as to receive an emptying hatch 36 for emptying of seed at exchange of the rotor 14 or for cleaning. A closing flap 37 is moveable along grooves 38, 39 on the upper side of the house 12 for shutting off supply of seed from the container 2. It is important that the seed house 12 is so placed in the seed drill that the farmer can gain access to the seed house 12 and its rotor 14 in a not too complicated way. The user has to be able to easily gain access to the gable where the motor 18 and the rotor 14 are inserted. This means that the transmission 26 in both seed houses 5, 8 must be mounted on the side gables 21, 24 of the house 12, which face each other. According to the invention the seed houses 5, 8 can therefore be adapted so that the rotor and the motor are mountable from any direction on the seed houses 5, 8. In order to achieve this the entry holes for the rotor 14 and the motor 18 on each side of the seed houses are thus each of equal size and the motor and the rotor ridges are adapted to the dimensions of the respective holes. In particular the ridges 16 of the rotor 14 are rotatably journalled in bearings in the mentioned holes 23 in the house 12.

A casing 40 is mounted over the transmission 26 to protect it. The casing is preferably screwed fast in the house 12. Through mounting the rotor 14 and the motor 18 inside the house the motor is protected from direct damage when the seed drill is used in an environment that can be exposed to external blows and impacts.

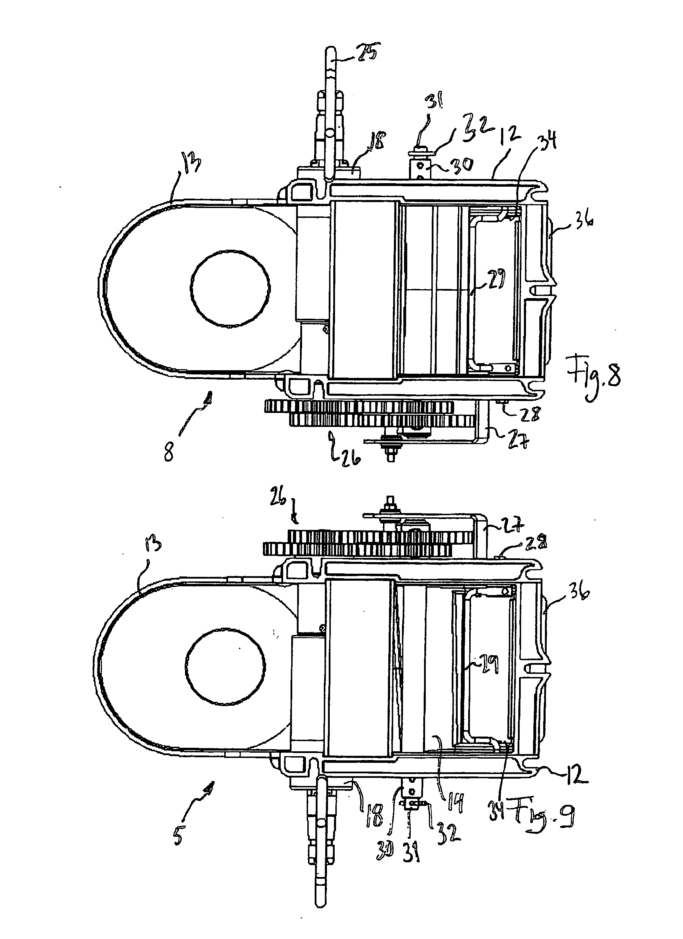

Figs. 8 and 9 show a planar view from above of the rotor 14 and the motor 18 assembled from opposite sides corresponding to the assembly in Fig. 1. One can thereby gain access to both seed houses 5 and 8 from outside the container 2, i.e. from the left and right side of the seed drill 1. This is a great advantage for the farmer, who thereby does not need to obtain access between the seed houses of the seed drill for maintenance, emptying and/or change of rotor. Change or maintenance of the motor can also take place from outside the container.

The invention can be varied in a number of different ways within the scope of the attached claims, although the embodiments described above are to be preferred.

## Claims

1. Seed house (5) for a seed drill comprising a house (12) with a rotor (14) for dosing of seed, a rotor driving motor (18) and a transmission (26) between the rotor and the motor, **characterised in that** the drive axle of the motor (18) and the central axle of the rotor (14) are generally parallel, that both rotor (14) and motor (18) are mounted within said house (12) and that the transmission (26) for transfer of driving power from the motor to the rotor is arranged outside the house (12).

2. Device according to Claim 1, **characterised in that** a casing (40) is mounted over the transmission and preferably screwed fast at the house.

3. Device according to Claim 1 or 2, **characterised in that** the drive axle (19) of the motor (18) and the centre axle (20) of the rotor (14) protrude out outside the house (12) and are connected to said transmission (26).

4. Device according to any one of Claims 1 - 3, **characterised in that** said transmission (26) is a cogged gear.

5. Device according to any one of Claims 1 - 4, **characterised in that** the motor (18) is mounted **in that** part of the house (12), which is facing the ejector part (13) of the house (5, 8) so as to be cooled down by the air flowing to the ejector part.

## Patentansprüche

1. Saatvorrichtung (5) für eine Drillsaat, umfassend eine Vorrichtung (12) mit einem Rotor (14) zum Dosieren von Saat, einen Rotorantriebsmotor (18) und eine Übertragung (26) zwischen dem Rotor und dem Motor, **dadurch gekennzeichnet, dass** die Antriebsachse des Motors (18) und die Mittelachse des Rotors (14) im Wesentlichen parallel sind, dass sowohl Rotor (14) als auch Motor (18) innerhalb der Vorrichtung (12) befestigt sind und dass die Übertragung (26) zum Übermitteln von Antriebsleistung von dem Motor an den Rotor außerhalb der Vorrichtung (12) angeordnet ist.

2. Vorrichtung nach Anspruch 1, **dadurch gekennzeichnet, dass** ein Gehäuse (40) über der Übertragung befestigt ist und vorzugsweise an der Vorrichtung festgeschraubt ist.

3. Vorrichtung nach Anspruch 1 oder 2, **dadurch gekennzeichnet, dass** die Antriebsachse (19) des Motors (18) und die Mittelachse (20) des Rotors (14) außerhalb der Vorrichtung (12) herausragen und mit der Übertragung (26) verbunden sind.

4. Vorrichtung nach einem der Ansprüche 1-3, **dadurch gekennzeichnet, dass** die Übertragung (26) ein Zahnradgetriebe ist.

5. Vorrichtung nach einem der Ansprüche 1-4, **dadurch gekennzeichnet, dass** der Motor (18) in dem Teil der Vorrichtung (12) befestigt ist, der dem Auswerferteil (13) der Vorrichtung (5, 8) gegenübersteht, um durch die zum Auswerferteil strömende Luft herabgekühlt zu werden.

## Revendications

1. Boîtier à semences (5) pour un semoir comportant un boîtier (12) avec un rotor (14) pour le dosage des semences, un moteur (18) d'entraînement de rotor et une transmission (26) entre le rotor et le moteur, **caractérisé en ce que** l'arbre d'entraînement du moteur (18) et l'arbre central du rotor (14) sont généralement parallèles, **en ce que** le rotor (14) et le moteur (18) sont tous les deux montés à l'intérieur dudit boîtier (12) et **en ce que** la transmission (26) pour le transfert de la force motrice du moteur au rotor est disposée à l'extérieur du boîtier (12).

2. Dispositif selon la revendication 1, **caractérisé en ce qu'**un boîtier (40) est monté sur la transmission et est de préférence vissé rapide au boîtier.

3. Dispositif selon la revendication 1 ou 2, **caractérisé en ce que** l'arbre d'entraînement (19) du moteur (18) et l'arbre central (20) du rotor (14) font saillie à l'extérieur du boîtier (12) et sont reliés à ladite transmission (26).

4. Dispositif selon l'une quelconque des revendications 1 à 3, **caractérisé en ce que** ladite transmission (26) est un engrenage à dents.

5. Dispositif selon l'une quelconque des revendications 1 à 4, **caractérisé en ce que** le moteur (18) est monté dans la partie du boîtier (12) qui est tournée vers la partie d'éjection (13) du boîtier (5, 8) de manière à être refroidi par l'air s'écoulant vers la partie d'éjection.
